Europäisches Patentamt

European Patent Office

Office européen des brevets

(11) Veröffentlichungsnummer: **0 484 670 A1**

## (12) EUROPÄISCHE PATENTANMELDUNG

(21) Anmeldenummer: **91116432.5**

(51) Int. Cl.5: **A21B 5/02**

(22) Anmeldetag: **26.09.91**

(30) Priorität: **07.11.90 DE 4035354**

(43) Veröffentlichungstag der Anmeldung:
**13.05.92 Patentblatt 92/20**

(84) Benannte Vertragsstaaten:
**AT BE CH DE DK ES FR GB GR IT LI LU NL SE**

(71) Anmelder: **GEBR. WIEBRECHT OHG**
**Hans-Böckler-Strasse 8**
**W-3400 Göttingen(DE)**

(72) Erfinder: **Wiebrecht, Bernd-Günther**
**Wiesenstrasse 21**
**W-3400 Göttingen(DE)**
Erfinder: **Wiebrecht, Heinz-Peter**
**Hans-Böckler-Strasse 8**
**W-3400 Göttingen(DE)**

(74) Vertreter: **Rehberg, Elmar, Dipl.-Ing.**
**Postfach 3162 Am Kirschberge 22**
**W-3400 Göttingen(DE)**

(54) **Verfahren zur Herstellung eines Waffelformteils aus ungesüsstem Teig.**

(57) Bei einem Verfahren zur Herstellung eines Waffelformteils (4) aus ungesüßtem Teig (2, 2') wird eine Menge des ungesüßten Teigs (2) in einer geschlossenen Backform zu einer Waffel (3) gepreßt gebakken. Anschließend wird nach dem Backen zu der Waffel (3), die auf der ersten Menge des ungesüßten Teigs (2) basiert, eine weitere Menge des ungesüßten Teigs (2') in die Backform (1) gegeben. Im Anschluß daran werden die Waffel (3) und die weitere Menge des ungesüßten Teigs (2') zusammen zu dem Waffelformteil (4) gebacken.

EP 0 484 670 A1

Die Erfindung bezieht sich auf ein Verfahren zur Herstellung eines Waffelformteils aus ungesüßtem Teig, bei dem eine Menge ungesüßten Teigs in einer geschlossenen Backform zu einem Waffelformteil gepreßt gebacken wird. Unter Gepreßtbakken wird verstanden, daß sich im Teig beim Bakken ein gewisser Arbeitsdruck, der wesentlich für das Backergebnis ist, einstellt. Dieser Arbeitsdruck ist nur bei solchen Mengen des ungesüßten Teigs zu erreichen, die jeweils einem sich über die ganze Backform erstreckenden fertigen Waffelformteil entsprechen.

Ein Verfahren der oben beschriebenen Art ist bekannt. Bei ihm wird das fertige Waffelformteil nach dem Backen der Backform entnommen. Die Eigenschaften dieses Waffelformteils sind für viele Anwendungsbereiche sehr nachteilig. Zum einen treten in den Waffelformteilen starke Spannungen auf, die so groß werden können, daß sie das Waffelformteil selbst zerstören. Diese Spannungen entstehen zwar nicht in direktem Zusammenhang mit dem Backvorgang, sondern erst durch die Aufnahme von Luftfeuchtigkeit in das Waffelformteil; dieser Prozeß ist jedoch unvermeidbar mit dem Bakken verbunden. Wenn die Spannungen das Waffelformteil nicht gänzlich zerstören, so treten doch vielfach Verzerrungen der äußeren Form und Risse in den Oberflächen des Waffelformteils auf. Nur durch aufwendige Konditionierungsanlagen, in denen die Waffelformteile kontrolliert auf Luftfeuchtigkeit gebracht werden, lassen sich diese Probleme in ihren Auswirkungen begrenzen. Zum anderen sind die Oberflächen der Waffelformteile vielen Verwendungsansprüchen nicht gewachsen. Wenn das Waffelformteil als Ersatz für herkömmliches Einweggeschirr dienen soll, weichen es schnell durch oder wird durch den Gebrauch von spitzen und scharfkantigen Gegenständen wie Messer und Gabel zerstört. Diese negativen Effekte lassen sich nicht durch den Einsatz von Teig mit geringerem Wasseranteil beseitigen, da sich dieser bei den gewünschten Wandstärken nicht durchbacken läßt. Vergleichbar sieht es auch bei einer Steigerung der Wandstärke als solche aus. Der Vorgang des Gepreßtbackens setzt hier enge Grenzen. Die Wandstärke, bei der der ungesüßte Teig zuverlässig durchgebacken wird, ist streng limitiert.

Der Erfindung liegt die Aufgabe zugrunde, ein Verfahren der eingangs beschriebenen Art aufzuzeigen, welches verstärkte Waffelformteile liefert, die über angemessene Zeiten nicht durchweichen und unempfindlich gegenüber den Einflüssen spitzer und scharfkantiger Gegenstände sind.

Erfindungsgemäß wird dies dadurch erreicht, daß nach dem Backen einer ersten Menge ungesüßten Teigs in der Backform zu dem Waffelformteil eine weitere Menge ungesüßten Teigs auf das bereits gebackene Waffelformteil in der Backform gegeben wird, und daß anschließend der Inhalt der Backform zu einem verstärkten Waffelformteil gepreßt gebacken wird. Überraschenderweise hat sich herausgestellt, daß es möglich ist, zu einem bereits gebackenen Waffelformteil weiteren Teig in die Backform zu geben und diesen unter normalen Bedingungen gemeinsam mit dem Waffelformteil nochmals zu backen. Hieraus resultiert ein verstärktes Waffelformteil, das eine außerordentlich hohe Materialdichte aufweist. Mit dieser hohen Materialdichte gehen zwei gewünschte Eigenschaften einher. Eine Tendenz zum Durchweichen setzt erst nach langanhaltendem Kontakt mit feuchten Substanzen ein. Die Oberflächen des verstärkten Waffelformteils sind so stabil, daß auf ihnen beispielsweise mit Messer und Gabel gegessen werden kann, ohne Zerstörungen hervorzurufen. Ebenso ist eine bemerkenswerte Bruchfestigkeit zu beobachten. Als unerwarteter Vorteil ist nicht zu übersehen, daß die Waffelformteile gemäß dem neuen Verfahren kaum zum Verziehen neigen. Ihre äußere Form entspricht nahezu vollständig dem Freiraum in der Backform, ohne daß Konditionierungsmaßnahmen notwendig sind. Dies wirkt sich besonders positiv bei Waffelformteilen aus, die paarweise beispielsweise zu einer Verpackung zusammengesteckt werden sollen. Probleme mit verzogenen Anlageflächen gehören der Vergangenheit an.

Die weitere Menge des ungesüßten Teigs kann in etwa der ersten Menge des ungesüßten Teigs entsprechen. Wird eine Gesamtmenge an ungesüßtem Teig verwendet, die dem Doppelten der üblichen Füllung der Backform entspricht, so ist eine maxiamle Materialdichte bei dem fertigen Waffelformteil zu erzielen. Überraschenderweise führt gerade die doppelte herkömmliche Teigmenge zu einem besonders stabilen und feuchtigkeitfesten Waffelformteil.

Die weitere Menge des ungesüßten Teigs kann dem Anteil an der ersten Menge des ungesüßten im tiefliegenden Bereich der Backform entsprechen. Das Waffelformteil wird damit im Bereich seines Bodens verstärkt. Waffelformteile gemäß dem neuen Verfahren sind aufgrund ihrer hohen Materialdichte und Festigkeit nur bedingt zum Verzehr geeignet. Dieser Nachteil läßt sich aber bei den abfalltechnischen Vorteilen von Mehlprodukten durchaus in Kauf nehmen. Wird zudem das Waffelformteil nur im Bereich seines Bodens gemäß dem neuen Verfahren verstärkt, so ist es möglich, den Nachteil zu minimieren. Allein die Bereiche des Waffelformteils, welche besonders durch Feuchtigkeit und mechanische Einwirkungen belastet werden, sind nur bedingt zum Verzehr geeignet. Realisieren läßt sich die lokale Verstärkung des Waffelformteils durch den gezielten Einsatz begrenzter, weiterer Mengen des ungesüßten Teigs. Diese werden nur in die Bereiche der Waffelform gegeben, die den zu verstärkenden Bereichen des Waffelformteils entsprechen. Dies wird in der Regel der Bodenbereich des Waffelformteils sein. Beim zweiten Backen kann dabei vorwiegend der Bereich der Backform erhitzt werden, der dem tiefliegenden Bereich zuzuordnen ist. Wenn nur in bestimmte Bereiche der Waffelbackform begrenzte weitere Mengen des ungesüßten Teigs gegeben werden, kann es sinnvoll sein, nur diese Bereiche beim zweiten Backen zu erhitzen. Hierdurch wird ein übermäßiges Backen der nicht durch die weitere Menge des ungesüßten Teigs eingefeuchteten Bereiche des Waffelformteils vermieden. Durch die Wärmeleitfähigkeit der Backform wird sich ihre lokale Erhitzung nur begrenzt realisieren lassen. Im gewünschten Maß ist sie jedoch möglich. Kalte Bereiche sollen an der Backform beim zweiten Backen auch gar nicht übrig bleiben, da sich in ihnen Feuchtigkeit ansammeln würde.

Eine an sich bekannte Backmaschine mit einer eine ungerade Anzahl von Backformen aufweisenden Fördereinrichtung, einer Teigeinfüllstation, einer Backstrecke und einer Entnahmestation kann zur Herstellung von Waffelformteilen verwendet werden, wobei an der Entnahmestation aus jeder zweiten Backform das verstärkte Waffelformteil entnommen wird. Jede Backform wird also an der Teigeinfüllstation mit Teig beschickt und im Bereich der Backstrecke erhitzt wird und in dem aus jeder zweiten Backform das fertig gebackene, verstärkte Waffelformteil entnommen wird, durchläuft jede Backform zweimal die Backstrecke, bis sie entleert wird. Das neue Verfahren läßt sich unter Verwendung einer an sich bekannten Backmaschine ohne besonderen Aufwand durchführen. Es ist nur dafür Sorge zu tragen, daß genau aus jeder zweiten Backform das fertig gebackene Waffelformteil entnommen wird. Zwischen zwei Entnahmevorgängen läuft somit jede Backform zweimal in der Backmaschine um. Sie wird zweimal an der Teigeinfüllstation mit Teig beschickt und zweimal im Bereich der Backstrecke erhitzt. In diesem Zusammenhang erweist es sich als vorteilhaft, daß alle herkömmlichen Backmaschinen umlaufende Fördereinrichtungen mit einer ungeraden Anzahl von Backformen aufweisen. Dies beruht auf den Umlenkeigenschaften von Fördereinrichtungen, die nur im Bereich von Gelenken verformbar sind. Das neue Verfahren läßt sich so nahezu ohne zusätzliche Investitionen durchführen. Allein bei einer automatischen Entnahmestation ist der Entnahmevorgang so einzurichten, daß nur jede zweite durchlaufende Backform betroffen ist.

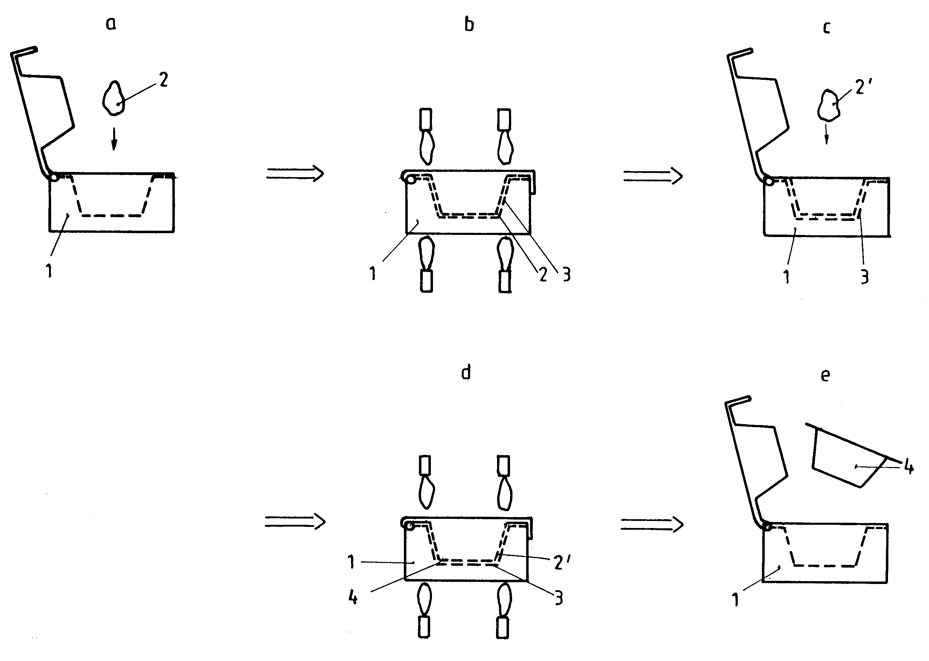

Die Erfindung wird im Folgenden anhand eines Ausführungsbeispiels näher erläutert und beschrieben. Die Figur zeigt eine schematische Darstellung des Ablaufs des Verfahrens zur Herstellung eines Waffelformteils.

Das in der Figur schematisch dargestellte Verfahren zur Herstellung eines Waffelformteils setzt sich aus Schritten a bis e zusammen. Im Schritt a wird in eine Backform 1 ungesüßter Teig 2 gegeben. Diese erste Menge des ungesüßten Teigs ist so bemessen, daß im Schritt b beim Backen innerhalb der Backform 1 ein notwendiger Backdruck entsteht. Dieser Backdruck ist Voraussetzung für das Gepreßtbacken, mit dem hier gearbeitet wird. Der ungesüßte Teig 2 dehnt sich beim Backen über die gesamte Backform 1 aus. Beim Backen wird aus dem gesüßten Teig 2 ein Waffelformteil 3. Anschließend wird beim Schritt c in die wieder geöffnete Backform 1 auf das Waffelformteil 3 ungesüßter Teig 2' gegeben. Die Zusammensetzung dieses Teigs 2' kann dieselbe sein wie die des anfänglich eingesetzten, ungesüßten Teigs 2. Die Menge, in der der ungesüßte Teig 2' auf das Waffelformteil gegeben wird, kann ebenfalls der anfänglich eingesetzten Menge entsprechen. Es ist aber auch möglich, nur eine solche Menge einzusetzen, die beispielsweise dem tieferliegenden Bodenbereich des Waffelformteils 3 entspricht. Im Schritt d wird der ungesüßte Teig 2' zusammen mit dem Waffelformteil 3 innerhalb der Backform 1 zu einem verstärkten Waffelformteil 4 gebacken. Wenn die Menge des ungesüßten Teigs 2' nur dem Bodenbereich des Waffelformteils 3 entspricht, kann es sinnvoll sein, im Schritt d nur den entsprechenden Bereich der Backform 1 zu erhitzen. Durch die Wärmeleitfähigkeit der Backform 1 wird dabei natürlich die gesamte Backform in gewissem Rahmen erwärmt. Im Schritt e wird das fertig gebackene, verstärkte Waffelformteil 4 aus der geöffneten Backform 1 entnommen. Das fertige Waffelformteil 4 erweist sich als äußerst formstabil. Auch ein Verziehen durch die Aufnahme von Luftfeuchtigkeit tritt so gut wie nicht auf. Eine vorteilhafte Bruchfestigkeit geht mit einer hohen Resistenz gegen die Einwirkung von scharfen und spitzen Gegenständen einher. Auch die Widerstandsfähigkeit gegen die Feuchtigkeit eingebrachter Substanzen ist als sehr gut zu bezeichnen. Sofern nur eine dem Bodenbereich entsprechende Menge des ungesüßten Teigs 2' eingesetzt wurde, beschränkt sich die außerordentliche Stabilität des Waffelformteils auf eben diesen Bodenbereich. In diesem Fall sind jedoch die weiteren Bereiche des Waffelformteils bei entsprechender Würzung des ungesüßten Teigs 2 vorzüglich zum Verzehr geeignet.

**Bezugszeichenliste:**

1 = Backform
2 = ungesüßter Teig
3 = Waffel
4 = Waffelformteil

**Patentansprüche**

1. Verfahren zur Herstellung eines Waffelformteils aus ungesüßtem Teig, bei dem eine Menge ungesüßten Teigs in einer geschlossenen Backform zu einem Waffelformteil gepreßt gebacken wird, dadurch gekennzeichnet, daß nach dem Backen einer ersten Menge ungesüßten Teigs in einer Backform zu dem Waffelformteil eine weitere Menge ungesüßten Teigs auf das bereits gebackene Waffelformteil in der Backform gegeben wird, und daß anschließend der Inhalt der Backform zu einem verstärkten Waffelformteil gepreßt gebacken wird.

2. Verfahren nach Anspruch 1, dadurch gekennzeichnet, daß die weitere Menge des ungesüßten Teigs in etwa der ersten Menge des ungesüßten Teigs entspricht.

3. Verfahren nach Anspruch 1, dadurch gekennzeichnet, daß die weitere Menge des ungesüßten Teigs dem Anteil an der ersten Menge des ungesüßten Teigs im tiefliegenden Bereich der Backform entspricht.

4. Verwendung einer an sich bekannten Backmaschine mit einer eine ungerade Anzahl von Backformen aufweisenden, umlaufenden Fördereinrichtung, einer Teigeinfüllstation, einer Backstrecke und einer Entnahmestation zur Herstellung von verstärkten Waffelformteilen gemäß den Ansprüchen 1 bis 3, wbei an der Entnahmestation aus jeder zweiten Backform das verstärkte Waffelformteil entnommen wird.

Europäisches Patentamt

**EUROPÄISCHER RECHERCHENBERICHT**

Nummer der Anmeldung

EP    91 11 6432

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3 817 919 (FRANZ HAAS WAFFELMASCHINEN ETC) * das ganze Dokument * | 1,2 | A21B5/02 |
| | --- | | |
| P,A | EP-A-0 433 590 (FIRMA KARL ÖXMANN ET AL) * Zusammenfassung; Abbildungen * | 1,2 | |
| | ----- | | |

| | |
|---|---|
| | **RECHERCHIERTE SACHGEBIETE (Int. Cl.5 )** |
| | A21B |

Der vorliegende Recherchenbericht wurde für alle Patentansprüche erstellt

| Recherchenort | Abschlußdatum der Recherche | Prüfer |
|---|---|---|
| DEN HAAG | 04 FEBRUAR 1992 | FRANKS N.M. |